# EUROPÄISCHE PATENTANMELDUNG

(11) **EP 2 116 118 A1**
(43) Veröffentlichungstag der Anmeldung: **11.11.2009**
(21) Anmeldenummer: 09159327.7
(22) Anmeldetag: 04.05.2009
(51) Int. Cl.: A01B 23/04, B23K 33/00

(54) **Rahmengestell für landwirtschaftliches Bodenbearbeitungsgerät**

(30) Priorität: 07.05.2008 DE 202008006308 U
(71) Anmelder: Horsch Maschinen GmbH, 92421 Schwandorf (DE)
(72) Erfinder: Horsch, Philipp, 92421, Schwandorf (DE)
(74) Vertreter: Benninger, Johannes

(57) **Zusammenfassung**

Die vorliegende Erfindung betrifft ein Rahmengestell (10) für ein landwirtschaftliches Bodenbearbeitungsgerät, umfassend mindestens ein kleineres Querprofil (12, 12', 12") und mindestens ein dazu annähernd rechtwinklig verlaufendes größeres Längsprofil (14, 14'). Die Profile sind derartig miteinander verbunden, dass die größeren Längsprofile (14, 14') an Ihren jeweiligen Enden eine nutförmige Ausnehmung (20) aufweisen, um die äußeren, kleineren Querprofile (12, 12', 12") ganz oder teilweise C-förmig zu umfassen.

## Beschreibung

Die vorliegende Erfindung betrifft ein Rahmengestell für ein landwirtschaftliches Bodenbearbeitungsgerät, an dem insbesondere verschiedene Bodenbearbeitungswerkzeuge wie Zinken oder Scheiben räumlich versetzt beziehungsweise hinter- und nebeneinander angeordnet sein können.

Rahmengestelle und deren Anwendungen sind in vielen Bereichen des Nutzfahrzeugbaus, insbesondere bei den Tragrahmenkonstruktionen bekannt. Auch im Anhängerbau sind derartige Rahmenkonstruktionen bekannt. Oftmals werden entsprechende Rahmenkonstruktionen auch in der Landwirtschaft eingesetzt, um den erhöhten Belastungen am Rahmen, beispielsweise bei Bodenbearbeitungswerkzeugen Stand zu halten.

Die US 4 220 211 A offenbart einen Tragrahmen eines landwirtschaftlichen Arbeitsgeräts, bei dem unten offene, U-förmige Längsprofile durch mehrere Querrohre mit rundem Querschnitt miteinander verbunden sind. Die Seitenflanken der Längsprofile sind mit runden Durchbrüchen versehen und werden von den nicht unterbrochenen Querrohren kleineren Querschnitts durchdrungen.

Aus der EP 0 916 777 A ist ein Verbindungszusammenbau bekannt, bei dem lang gestreckte Bauteile wie Rohre oder einseitig offene Profile an Kreuzungsstellen derart miteinander verbunden sind, dass eines der Bauteile durch eine Aufnahmeöffnung des jeweils anderen Bauteils hindurchgeführt und dort mit dem anderen Bauteil verbunden ist.

Die EP 0 963 807 A beschreibt einen Rahmen eines Arbeitsgeräts, der ein erstes Rohrbauteil mit ersten und zweiten Seitenwänden umfasst. In die erste Seitenwand ist eine Öffnung eingebracht, deren Querschnitt einem zweiten Rohrbauteil entspricht, das in der Öffnung aufgenommen ist. Eine Verbindungsstruktur in Form einer Schweißverbindung an den Durchdringungsstellen fixiert das erste und zweite Rohrbauteil aneinander. Der Querschnitt der kleineren Vierkantrohre ist deutlich geringer als der Querschnitt der von den kleineren Rohren durchdrungenen größeren Vierkantrohre, so dass an den Verbindungsstellen ein deutlicher Spalt zwischen den Außenmantelflächen des kleineren Rohrquerschnitts und den Innenmantelflächen des größeren Querschnitts verbleibt.

Aus der DE 103 371 51 B4 ist eine Knotenstruktur zur Verbindung von zwei Profilen bekannt, insbesondere in einem Fahrzeugtragrahmen, von denen das erste Profil mindestens zwei ebene, parallele Seiten aufweist und das zweite Profil aus zwei parallelen, sich gegenüberliegenden Gurten und mindestens einem die Gurte verbindenden Steg besteht, wobei die Gurte mit ihren seitlichen Enden gegenüber dem Steg überstehen und mit diesen Überständen paarweise parallele Flansche bilden, **dadurch gekennzeichnet, dass** das erste Profil am Ort der Verbindung eine Aussparung aufweist, in die das zweite Profil stirnseitig derart eingesteckt ist, dass die parallelen Seiten der sich gegenüber liegenden, die Aussparung begrenzenden Enden des ersten Profils formschlüssig an den Innenseiten der sich gegenüberliegenden Flansche des zweiten Profils anliegen und mit diesen verbunden sind.

Die AT 500 249 B1 offenbart weiterhin eine Scheibenegge mit einem Tragrahmen aus miteinander verschweißten Rohr- oder Trägerprofilen, die jeweils ähnliche Rohr- bzw. Trägerquerschnitte aufweisen, so dass eine stabile verschweißte Verbindungsstruktur geschaffen ist.

Aus der DE 10 2006 010 464 A1 ist schließlich eine Rahmenkonstruktion bekannt, bestehend aus zwei oder mehr Längsprofilen und zwei oder mehr Querprofilen, die miteinander verbunden sind. Jedes Querprofil und jedes Längsprofil ist jeweils aus mindestens zwei aufeinander steckbaren Profilelementen gebildet. Diese Profilelemente sind derart ausgebildet, dass sie wahlweise zur Bildung eines Längs- oder Querprofils in ihrer Längsrichtung und zur Verbindung von Längs- und Querprofil quer zueinander aufeinander steckbar sind.

Aufgabe der Erfindung ist, ein mechanisch hoch belastbares und dabei möglichst einfach und kostengünstig herstellbares Rahmengestell zur Verfügung zu stellen, mit dem eine möglichst günstige Kraftübertragung zwischen Profilen geschaffen wird, das die Schweißaufwendungen reduziert und die Quersteifigkeit der Rahmenkonstruktion deutlich erhöht.

Die obige Aufgabe wird mit dem Gegenstand des unabhängigen Anspruchs gelöst. Merkmale vorteilhafter Weiterbildungen finden sich in den abhängigen Ansprüchen.

Das erfindungsgemäße Rahmengestell für landwirtschaftliche Bodenbearbeitungsgeräte umfasst mindestens ein kleineres Querprofil und mindestens ein dazu annähernd rechtwinklig verlaufendes größeres Längsprofil, die derartig miteinander verbunden sind, dass die größeren Längsprofile an Ihren jeweiligen Enden eine nutförmige Ausnehmung aufweisen, um die äußeren, kleineren Querprofile ganz oder teilweise C-förmig zu umfassen. An den Stoß- bzw. Verbindungsstellen sind die Kanten des C-förmig offenen größeren Längsprofils durchgängig mit der davon umfassten Außenmantelfläche des kleineren Querprofils verschweißt. Ein Vorteil dieser Bauweise mit größerem Längsprofil und kleinerem Querprofil besteht darin, dass die auftretenden Momente in die kleineren Querprofile eingeleitet und von den größeren Längsprofilen aufgenommen werden. Ein weiterer Vorteil ist, dass der Schweißaufwand dadurch reduziert wird. Durch den damit verbundenen geringeren Schweißaufwand an bestimmten Verbindungsstellen zwischen größeren Längsprofilen und kleineren Querprofilen des Rahmengestells führt dies zugleich zu einer Reduzierung der Spannungen im gesamten Bauteil. Durch die vorher aufgezeigten Vorteile ist diese Art von Rahmenverbindung nahezu prädestiniert für den Einsatz bei landwirtschaftlichen Geräten, beispielsweise an Grubbern, bei denen besonders die Querelemente sehr stark auf Torsion belastet werden.

Eine bevorzugte Ausführungsvariante des erfindungsgemäßen Rahmengestells sieht vor, dass der Innenquerschnitt der größeren Längsprofile ungefähr dem Außenquerschnitt der kleineren Querprofile entspricht. Ein Vorteil dieser Ausführungsform liegt darin, dass durch die Umfassung an den beiden äußeren, kleineren Querprofilen mit entsprechenden Größendimensionierung der Profile keine weiteren Endplatten, Knotenbleche oder dergleichen notwendig sind, da diese Verbindung nach dem Schweißen weitgehend dicht ist. Die umlaufende Kante des größeren Längsprofils kann an den Stoßstellen durchgängig und umlaufend mit der Außenmantelfläche des kleineren Querprofils verschweißt werden. Durch dieses sog. Dichtschweißen wird eine mechanisch sehr stabile Verbindung geschaffen, die zudem auf jegliche zusätzliche Deckel oder Verstrebungen o. dgl. verzichten kann, wodurch ein schnell und kostengünstig herstellbares Rahmenprofil zur Verfügung gestellt wird. Hierbei sind die größeren Längsprofile an ihren mit der C-förmigen Nut ausgebildeten Enden jeweils durchgängig mit den von der Nut an drei Seiten umfassten Mantelfläche der kleineren Querprofile verschweißt, so dass eine mechanische Verbindung sehr hoher Stabilität geschaffen ist.

Vorzugsweise sind die kleineren Querprofile und die größeren Längsprofile jeweils im Wesentlichen als Vierkantprofile ausgebildet. Diese Profile sind jeweils vorzugsweise mit durchgängiger Schweißnaht miteinander verbunden. Die kleineren Querprofile können beispielsweise einen Querschnitt von ca. 100 mm während die größeren Längsprofile einen Querschnitt von ca. 120 mm aufweisen können. Wenn zudem bei derartigen Dimensionierungen die kleineren Querprofile und die größeren Längsprofile eine Wandstärke von jeweils ca. 8 mm bis 10 mm aufweisen, können Verbindungen zwischen den Rohrprofilen hergestellt werden, deren geringes Spaltmaß sich problemlos durch Schweißverbindungen überbrücken lässt. Nach dem Verschweißen verbleibt somit kein Spalt, so dass eine dichte Verbindung ohne zusätzliche Deckel oder Verbindungsbauteile geschaffen wird.

Bei dem erfindungsgemäßen Rahmengestell für landwirtschaftliche Bodenbearbeitungsgeräte kann ggf. des Weiteren vorgesehen sein, dass das kleinere Querprofil einen mit seiner Außenkontur korrespondierenden durchgängigen Durchbruch des größeren Längsprofils durchdringt. Die größeren Längsprofile sind dabei so ausgeschnitten, dass ein dazu entsprechendes kleineres Querprofil durch das größere Längsprofil hindurch geführt wird. Die oberen und unteren Flächen der größeren Längsprofile verlaufen dabei über beziehungsweise unter den kleineren Querprofilen. Dies hat den Vorteil, dass die oberen und unteren Flächen der größeren Längsprofile die Torsionsmomente der kleineren Querprofile optimal aufnehmen. Ein weiterer Vorteil besteht darin, dass die größeren Längsprofile gleichzeitig die Querkräfte der kleineren Querprofile optimal aufnehmen.

Eine weitere Ausgestaltung des erfindungsgemäßen Rahmengestells besteht darin, die größeren Längsprofile und die kleineren Querprofile durch verschiedene Ausführungsformen auszubilden. So sind beispielsweise auch Mehrkantprofile denkbar. Eine bevorzugte Möglichkeit einer Ausführungsform ist es, die größeren Längsprofile und die kleineren Querprofile im Wesentlichen als Vierkantprofile auszubilden. Die Dimensionierung der kleineren Querprofile und der größeren Längsprofile sollte dabei so gewählt werden, dass der Innenquerschnitt der größeren Längsprofile ungefähr dem Außenquerschnitt der kleineren Querprofile entspricht. Wie bereits erwähnt, wäre als eine mögliche Kombination von Vierkantprofilen denkbar, kleinere Querprofile mit einem Außenquerschnitt von ca. 100 mm und größere Längsprofile mit einem Außenquerschnitt von ca. 120 mm zu kombinieren. Eine weitere Möglichkeit ist, Profile zu verwenden, die Querschnittsabmessungen von ca. 120 mm und ca. 140 mm aufweisen. Generell lässt sich sagen, dass es für die Praxis von Vorteil sein dürfte, wenn bei dem erfindungsgemäßen Rahmengestell die kleineren Querprofile einen Querschnitt aufweisen, der etwa einem Wert zwischen 70 und 90 % des Querschnitts der größeren Längsprofile entspricht.Die Wandstärke der größeren Längsprofile und der kleineren Querprofile kann eine sinnvolle Stärke von ca. 8 mm bis 10 mm aufweisen. Ein Vorteil dieser Ausführungsform liegt darin, dass durch die Umfassung an den beiden äußeren, kleineren Querprofilen mit entsprechenden Größendimensionierung der Profile keine weiteren Endplatten, Knotenbleche oder dergleichen notwendig sind, da diese Verbindung nach dem Schweißen weitgehend dicht ist.

Im Folgenden soll ein Ausführungsbeispiel die Erfindung und ihre Vorteile anhand der beigefügten Figuren näher erläutern. Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt.

Fig. 1 zeigt eine Perspektivansicht einer ersten Ausführungsform des Rahmengestells.

Fig. 2 zeigt eine schematische Draufsicht der ersten Variante des Rahmengestells gemäß Fig. 1.

Fig. 3 zeigt eine schematische Seitenansicht der ersten Variante des Rahmengestells gemäß Fig. 1.

Fig. 4 zeigt eine Perspektivansicht einer weiteren Ausführungsform des Rahmengestells.

Fig. 5 zeigt eine schematische Draufsicht der zweiten Variante des Rahmengestells gemäß Fig. 4.

Fig. 6 zeigt eine schematische Seitenansicht der zweiten Variante des Rahmengestells gemäß Fig. 4.

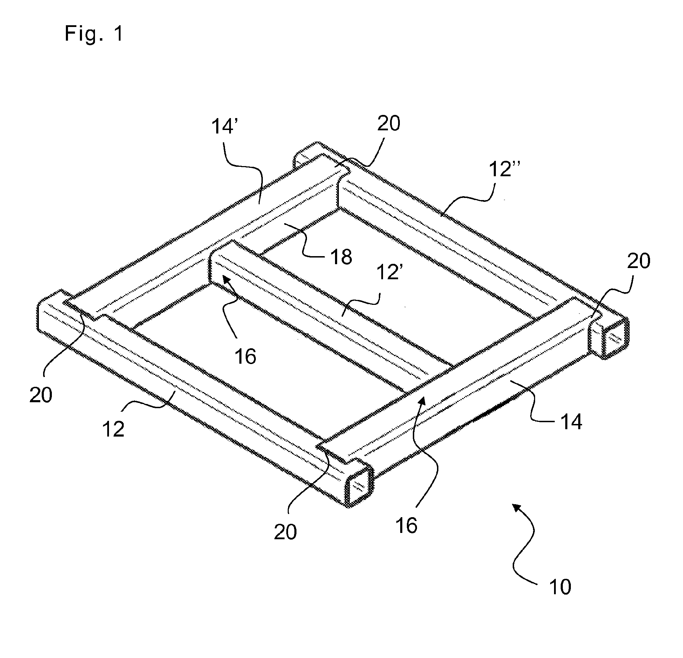

Für gleiche oder gleich wirkende Elemente der Erfindung werden in den nachfolgend beschriebenen Figuren 1 bis 6 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellte Ausführungsform stellt lediglich ein Beispiel dar, wie das erfindungsgemäße Rahmengestell ausgestaltet sein könnte und stellt keine abschließende Begrenzung dar.

Die schematische Darstellung der Fig. 1 zeigt eine perspektivische Ansicht einer ersten Ausführungsvariante eines erfindungsgemäßen Rahmengestells 10, umfassend drei parallel zueinander angeordnete kleinere Vierkantprofile 12, 12' und 12", die mit zwei dazu annähernd senkrecht verlaufenden größeren Vierkantprofilen 14 und 14' verbunden sind, wobei ein kleineres, mittig angeordnetes Vierkantprofil 12' und die dazu rechtwinklig verlaufenden größere Vierkantprofile 14 bzw. 14' jeweils eine T-förmige Verbindung 16 bilden. Das mittig angeordnete Vierkantprofil 12' der drei parallel zueinander verlaufenden kleineren Vierkantprofile 12, 12' und 12" stößt beidseitig stumpf an die zueinander weisenden Seitenwände 18 und ist dort vorzugsweise verschweißt.

Die beiden äußeren, größeren Vierkantprofile 14 und 14' weisen an Ihren jeweiligen Enden eine nutförmige Ausnehmung 20 auf, um die beiden äußeren, kleineren Vierkantprofile 12 und 12" C-förmig zu umfassen. Wie in Fig. 1 zu erkennen ist, sind die Enden der Vierkantprofile 14 und 14' entlang des gesamten Umfangs ihrer C-förmigen Ausnehmung 20 mit der Außenmantelfläche der kleineren Vierkantprofile 12 und 12" verschweißt, so dass sich eine geschlossene, umlaufende Schweißnaht ergibt. Die zuvor offenen Enden sind somit dichtgeschweißt. Ein Vorteil dieser Ausführungsform des Rahmengestells 10 besteht darin, dass durch die gezielte Anordnung und Kombination von größeren Längsprofilen 14 und kleineren Querprofilen 12 die Torsionsmomente der kleineren Querprofile 12 in optimaler Weise in die größeren Längsprofile 14 eingeleitet werden können, da besonders die kleineren Querprofile 12 sehr hohen Torsionsbelastungen ausgesetzt sind. Ein weiterer Vorteil dieses Rahmengestells 10 besteht darin, dass durch eine Vielzahl von Kombinationen von Vierkantprofilen mit relativ geringem Unterschied bezüglich der Querschnittsabmessungen die Außenbereiche der Konstruktion automatisch miteinander dicht geschweißt sind und folglich keine weiteren Abschlusselemente benötigt werden um die Vierkantprofile zu verschließen.

Als zwei sinnvollen einer Vielzahl möglicher Kombinationen wäre denkbar, Vierkantprofile mit Querschnittsabmessungen von 100 x 100 mm sowie 120 x 120 mm oder auch eine Kombination von 120 x 120 mm und 140 x 140 mm zu verwenden. Die sinnvolle Wandstärke derartiger Kombinationen läge in einem Bereich von ca. 8 ... 10 mm, so dass sich auf diese Weise eine Verbindung mit minimalem Spalt ergäbe, die sich problemlos mit einer Schweißnaht unter Überbrückung des sich ergebenden Abstandes verbinden ließe. Generell lässt sich sagen, dass es für die Praxis von Vorteil sein dürfte, wenn bei dem erfindungsgemäßen Rahmengestell 10 die kleineren Querprofile 12, 12' und 12" einen Querschnitt aufweisen, der etwa einem Wert zwischen 70 und 90 % des Querschnitts der größeren Längsprofile 14 und 14' entspricht.

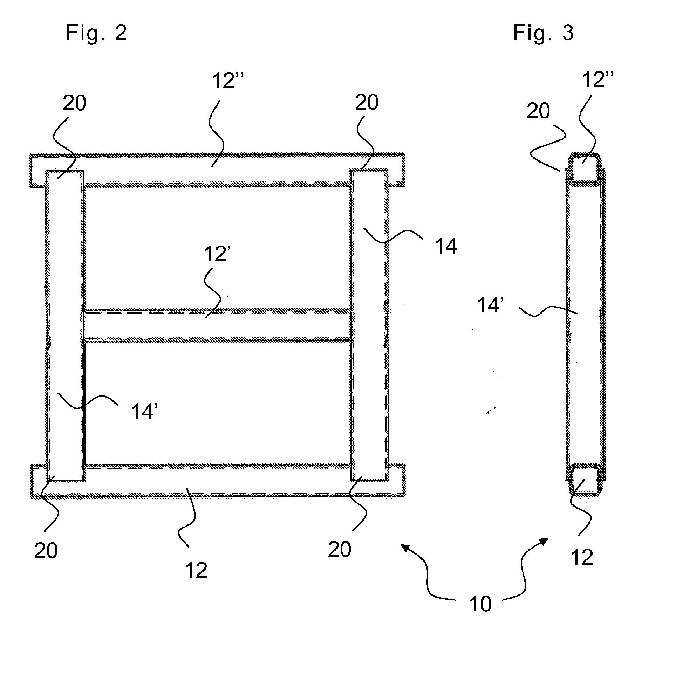

Die schematische Darstellung der Fig. 2 zeigt in einer Draufsicht die Anordnung des Rahmengestells 10. Die äußeren beiden kleineren Vierkantprofile 12 und 12" können wie in Fig. 2 angedeutet, beidseitig gegenüber den größeren Vierkantprofilen 14 und 14' einen Überstand aufweisen; sie können jedoch wahlweise auch bündig abschließen. Die Darstellung der Fig. 3 verdeutlicht in einer Seitenansicht, dass ein größeres Vierkantprofil 14 bzw. 14' mit mindestens zwei dazu senkrecht verlaufenden kleineren Vierkantprofilen 12, und 12" verbunden ist. Da das mittig angeordnete kleinere Vierkantprofil 12' das größere Vierkantprofil 14 bzw. 14' nicht durchdringt, ist es in dieser Darstellung nicht erkennbar. Die beiden äußeren, kleineren Vierkantprofile 12 und 12" überragen hierbei mit ihrem halben Querschnitt jeweils die größeren Vierkantprofile 14 bzw. 14'. Die beiden äußeren, größeren Vierkantprofile 14 und 14' weisen zudem an Ihren Enden jeweils die nutförmige Ausnehmung 20 auf, die die beiden äußeren, kleineren Vierkantprofile 12 und 12" C-förmig umfasst.

Selbstverständlich kann das Rahmengestell 10 gegenüber der dargestellten Ausführungsvariante auch mit weiteren Profilen erweitert werden. Ein Vorteil dieser Ausführungsform besteht unter anderem in der flexiblen Gestaltungsweise der größeren und kleineren Vierkantprofile 12 und 14. Ein weiterer Vorteil liegt darin, durch die entsprechenden Verbindungen der Vierkantprofile die Quersteifigkeit des Rahmengestells zu erhöhen.

Besonders vorteilhaft lassen sich die Ausnehmungen 20 mittels eines Laserschneidverfahrens herstellen, da auf diese Weise sehr schnell und präzise die gewünschten Profilgeometrien herstellbar sind, die sich anschließend in gewünschter Weise zum Rahmengestell 10 durch Schweißen zusammenfügen lassen.

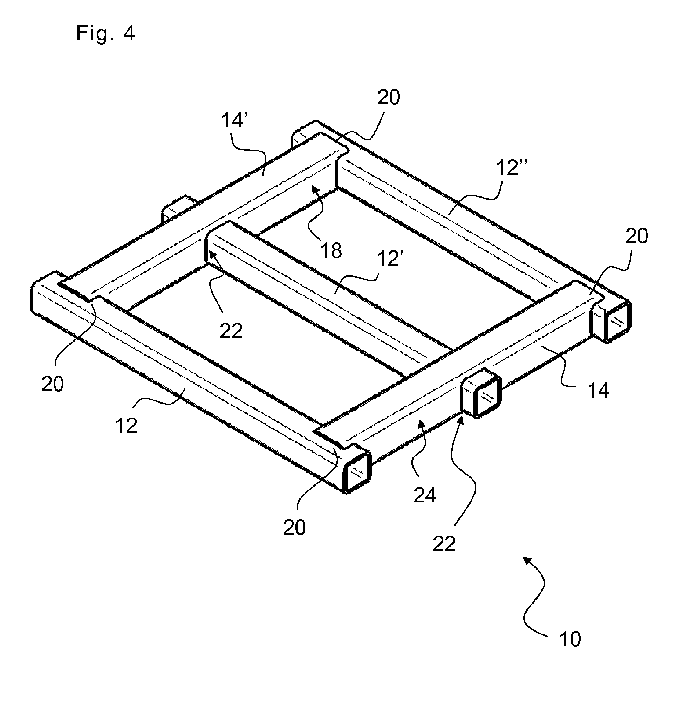

Die schematischen Darstellungen der Figuren 4 bis 6 zeigen ein alternatives Ausführungsbeispiel eines Rahmengestells 10. Dieses unterscheidet sich im Wesentlichen nur durch die geänderte Verbindung des mittig angeordneten kleineren Querprofils bzw. Vierkantprofils 12' mit den dazu rechtwinkelig angeordneten größeren Vierkantprofilen bzw. Längsprofilen 14 und 14', die von dem Querprofil 12' jeweils vollständig durchdrungen werden. An dieser Durchdringungsstelle 22 ist das größere Längsprofil 14 bzw. 14' jeweils mit einer mit dem Außenumfang des Querprofils 12' korrespondierenden Aussparung 22 versehen, die vorzugsweise an beiden Durchdringungsstellen der jeweiligen Seitenwände 18 bzw. 24 mit dem Außenumfang des Querprofils 12' verschweißt werden können.

Besonders vorteilhaft lassen sich die Aussparungen 22 wie auch die Ausnehmungen 20 mittels eines Laserschneidverfahrens herstellen, da auf diese Weise sehr schnell und präzise die gewünschten Profilgeometrien herstellbar sind, die sich anschließend in gewünschter Weise zum Rahmengestell 10 durch Schweißen zusammenfügen lassen.

Der übrige Aufbau der zweiten Variante gemäß Fig. 4, 5 und 6 entspricht weitestgehend der zuvor beschriebenen Variante, so dass auf weitere detaillierte Erläuterungen verzichtet werden kann. Gleiche Teile wie in den Figuren 1 bis 3 sind wiederum mit gleichen Bezugziffern bezeichnet.

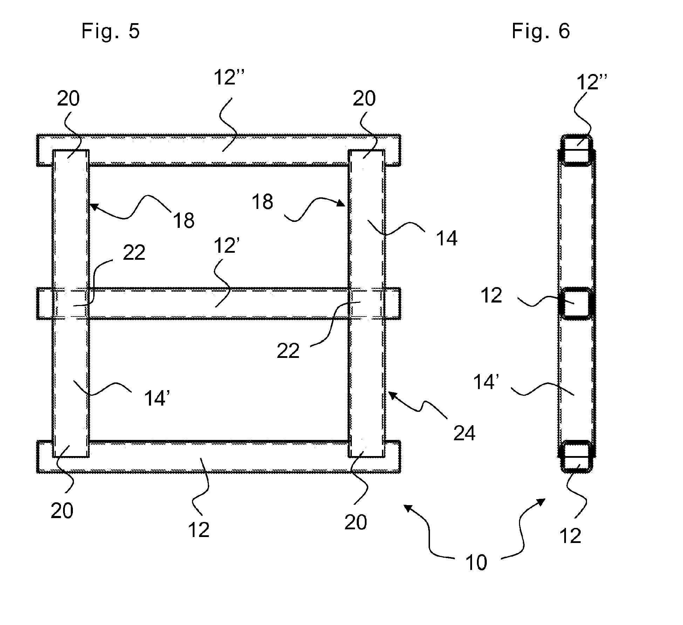

Die drei kleineren Vierkantprofile 12, 12' und 12" können wie in Fig. 5 angedeutet, beidseitig gegenüber den größeren Vierkantprofilen 14 und 14' einen Überstand aufweisen; sie können jedoch auch bündig abschließen. Der Rahmen könnte hierbei aber auch mit weiteren Profilen erweitert werden. Ein Vorteil dieser Ausführungsform besteht unter anderem in der flexiblen Gestaltungsweise der größeren und kleineren Vierkantprofile. Ein weiterer Vorteil liegt darin, durch die entsprechenden Verbindungen der Vierkantprofile die Quersteifigkeit des Rahmengestells zu erhöhen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Rahmengestell
- 12: Kleineres Querprofil / Kleineres Vierkantprofil
- 14: Größeres Längsprofil / Größeres Vierkantprofil
- 16: T-Verbindung
- 18: Seitenwand
- 20: Ausnehmung
- 22: Aussparung
- 24: Seitenwand

## Patentansprüche

1. Rahmengestell (10) für ein landwirtschaftliches Bodenbearbeitungsgerät, umfassend mindestens ein kleineres Querprofil (12, 12', 12") und mindestens ein dazu annähernd rechtwinklig verlaufendes größeres Längsprofil (14, 14'), die derartig miteinander verbunden sind, dass die größeren Längsprofile (14, 14') an Ihren jeweiligen Enden eine nutförmige Ausnehmung (20) aufweisen, um die äußeren, kleineren Querprofile (12, 12', 12") ganz oder teilweise C-förmig zu umfassen.

2. Rahmengestell nach Anspruch 1, bei dem der Innenquerschnitt der größeren Längsprofile (14, 14') ungefähr dem Außenquerschnitt der kleineren Querprofile (12, 12', 12") entspricht.

3. Rahmengestell nach Anspruch 1 oder 2, bei dem die kleineren Querprofile (12, 12', 12") und die größeren Längsprofile (14, 14') jeweils im Wesentlichen als Vierkantprofile ausgebildet sind.

4. Rahmengestell nach einem der Ansprüche 1 bis 3, bei dem die größeren Längsprofile (14, 14') an ihren mit der C-förmigen Nut ausgebildeten Enden jeweils durchgängig mit den von der Nut bzw. nutförmigen Ausnehmung (20) an drei Seiten umfassten Mantelfläche der kleineren Querprofile (12, 12', 12") verschweißt sind.

5. Rahmengestell nach Anspruch 4, bei dem die Profile (14, 14', 12, 12', 12") jeweils mit durchgängiger Schweißnaht miteinander verbunden sind.

6. Rahmengestell nach einem der Ansprüche 1 bis 5, bei dem die kleineren Querprofile (12, 12', 12") vorzugsweise einen Querschnitt aufweisen, der etwa einem Wert von 70 - 90 % des Querschnitts der größeren Längsprofile (14, 14') entspricht.

7. Rahmengestell nach einem der Ansprüche 1 bis 6, bei dem die kleineren Querprofile (12, 12', 12") vorzugsweise einen Querschnitt von ca. 100 mm und die größeren Längsprofile (14, 14') einen Querschnitt von ca. 120 mm aufweisen.

8. Rahmengestell nach einem der Ansprüche 1 bis 6, bei dem die kleineren Querprofile (12, 12', 12") vorzugsweise einen Querschnitt von ca. 120 mm und die größeren Längsprofile (14, 14') einen Querschnitt von ca. 140 mm aufweisen.

9. Rahmengestell nach einem der Ansprüche 1 bis 8, bei dem die kleineren Querprofile (12, 12', 12") und die größeren Längsprofile (14, 14') jeweils eine Wandstärke von ca. 8 mm bis 10 mm aufweisen.
